# EUROPÄISCHE PATENTSCHRIFT

(11) **EP 3 851 830 B1**
(45) Veröffentlichungstag und Bekanntmachung des Hinweises auf die Patenterteilung: **01.05.2024**
(21) Anmeldenummer: 21151000.3
(22) Anmeldetag: 11.01.2021
(51) Int. Cl.: G01N 17/02, C23F 13/22, F24H 9/45, F28F 19/00, F28D 20/00

(54) **VERFAHREN ZUR ZUSTANDSBESTIMMUNG EINER OPFERANODE IN EINEM WASSERSPEICHER**
METHOD FOR DETERMINING THE CONDITION OF A SACRIFICIAL ANODE IN A WATER STORAGE DEVICE
PROCÉDÉ DE DÉTERMINATION DE L'ÉTAT D'UNE ANODE SACRIFICIELLE DANS UN RÉSERVOIR D'EAU

(30) Priorität: 15.01.2020 DE 102020100808
(43) Veröffentlichungstag der Anmeldung: 21.07.2021
(73) Patentinhaber: Stiebel Eltron GmbH & Co. KG, 37603 Holzminden (DE)
(72) Erfinder: Kronenberg, Philipp, 33034 Brakel (DE)

(56) Entgegenhaltungen:
- DE-A1-102008 013 943
- DE-B4-102004 004 064
- DE-B4-102008 013 943
- JP-A- 2011 075 492

## Beschreibung

Die Erfindung betrifft ein Verfahren zur Zustandsbestimmung einer Opferanode in einem Wasserspeicher.

Warmwasserspeicher mit emaillierten Behältern sind in der Regel mit einem kathodischen Korrosionsschutzsystem ausgestattet, um die Korrosion des Behälters dauerhaft zu verringern. Fertigungsbedingt weist die Emaillierung stets Fehlstellen auf, an denen der Stahlbehälter im direkten Kontakt mit dem Elektrolyt steht. Kathodische Korrosionsschutzsysteme schützen diese Fehlstellen durch eine Potenzialverschiebung vor Korrosion. Bei Warmwasserspeichern wird der kathodische Korrosionsschutz üblicherweise durch Fremdstromanoden oder galvanische Opferanoden sichergestellt. Fremdstromanodensysteme sind wartungsfrei, benötigen allerdings eine unterbrechungsfreie Stromversorgung, um den Korrosionsschutz durchgehend zu gewährleisten. Galvanische Opferanoden wie beispielsweise Magnesiumanoden benötigen keine externe Stromversorgung, allerdings unterliegen sie einem fortwährenden Verbrauch des Anodenmaterials. Daher müssen Opferanoden regelmäßig kontrolliert und ausgetauscht werden, um einen durchgehenden Korrosionsschutz sicherzustellen.

Um diese Wartung und den damit verbundenen Aufwand nur im Fall einer verbrauchten Anode durchführen zu müssen, können Warmwasserspeicher über Anzeigeeinrichtungen verfügen, die den Verbrauchszustand der Opferanode anzeigen. Für diese Anzeigeeinrichtungen werden spezielle Magnesiumanoden eingesetzt, die auch als Signalanoden bezeichnet werden. Signalanoden weisen einen hohlen Kanal im Inneren des Anodenstabs auf. Verbraucht sich das Anodenmaterial mit zunehmender Betriebszeit, so gelangt irgendwann Wasser in den Kanal und wird über diesen zu einem Sensor geleitet, der einen Druckschalter enthält, der über den einwirkenden Wasserdruck bei verbrauchter Opferanode mit offen liegendem inneren Kanal betätigt wird.

Alternativ kann das in den Kanal eindringende Wasser eine Verfärbung einer Farbumschlagpille bewirken, die an einem von außen einsehbaren Schauglas sichtbar ist.

Die vorgenannten Überwachungsvorrichtungen haben den Nachteil, dass sie nur ein digitales Signal liefern, das anliegt, wenn Wasser in den inneren Kanal eindringt. Dennoch kann eine erhebliche Restmasse des Materials des Opfermaterials vorhanden sein, die weiterhin für den Korrosionsschutz nutzbar ist. Der Verschleißzustand wird also zu früh angezeigt, so dass die theoretisch mögliche Standzeit der Opferanode nicht ausgenutzt wird.

In der DE 10 2004 004 064 B4 wird eine Vorrichtung zur Überwachung des Verbrauchs einer Opferanode beschrieben. Diese Vorrichtung verfügt über eine Schalteinrichtung, die den Strom der Magnesiumanode misst und mit einem Grenzwert vergleicht.

Die Internationale Veröffentlichung WO 2007/010335 beschreibt einen Warmwasserspeicher mit einer Vorrichtung zur Überwachung der Opferanode, unter anderem durch Messung eines Anodenstroms und eine Potenzialmessung mittels einer Fremdstromanode, wozu zusätzliche Bauteile und elektrische Einrichtungen erforderlich sind.

DE 10 2008 013 943 B4 offenbart eine Testvorrichtung zum Testen einer Anode in einem Warmwasser-Speicher. Die Testvorrichtung umfasst ein Strommessgerät, das mit der Anode und dem Warmwasser-Speicher elektrisch leitend verbunden ist. Parallel zum Strommessgerät ist ein Schalter geschaltet, der im Betriebszustand des Warmwasser-Speichers geschlossen ist und zur Erfassung des Anodenstromes geöffnet wird.

JP 2011 075 492 A betrifft eine Vorrichtung zum Messen einer Querschnittsformänderung an einem Metallkörper in einer leitenden Flüssigkeit, aufweisend mindestens eine nahe des Metallkörpers anzuordnende und um den Metallkörper herum zu bewegende Elektrode. Zwischen dem Metallkörper und der Elektrode wird eine elektrische Wechselspannung angelegt und die Wechselstromimpedanz gemessen.

Die Aufgabe der Erfindung besteht somit darin, ein Verfahren zur Zustandsbestimmung einer Opferanode in einem Wassertank anzugeben, mit dem erst dann ein Verschleißzustand der Opferanode signalisiert wird, wenn nur noch eine geringe Restmasse der Opferanode vorhanden ist und/oder den Verschleißzustand über die Lebensdauer überwachen zu können.

Diese Aufgabe wird durch ein Verfahren zur Zustandsbestimmung einer Opferanode in einem Wasserspeicher mit den Merkmalen des Anspruchs 1 gelöst.

Die Erfindung basiert auf einer Anwendung einer Impedanzmessung an der Opferanode über ein hochfrequentes Messsignal, wobei als Zustandsindikator eine qualitative und quantitative Bewertung der Oberfläche der Opferanode auf Basis der Impedanz- bzw. Kapazitätsmessung durchgeführt wird. Hierüber kann ein direkter Rückschluss auf den tatsächlichen Verbrauchszustand der Magnesiumanode gezogen werden.

Die Erfindung geht von der Erkenntnis aus, dass sich in einer Grenzschicht zwischen dem Magnesiumwerkstoff der Opferanode bzw. einem anderen unedlen Metall und dem Elektrolyt eine sogenannte Helmholtz-Doppelschicht ausbildet oder ausprägt. Die Helmholtz-Doppelschicht besteht aus der genannten Helmholtzschicht und der entgegengesetzt geladenen Schicht in der Elektrode. Eine Helmholtzschicht ist ein schmaler Bereich innerhalb eines Elektrolyten, der direkt an eine Elektrode angrenzt und der eine Überschussladung trägt. Die metallische Elektrode besitzt in dem Bereich eine positive Überschussladung, die durch die Ladung der Anionen in der Helmholtzschicht auf der Elektrolytseite ausgeglichen wird. Durch die Ausrichtung aller elektrischen Teilchen in diesem Bereich ist dieser elektrisch nicht leitfähig und wirkt wie ein Kondensator. Folglich kann nach der Erfindung eine qualitative und quantitative Bewertung der Oberfläche der Opferanode mit den bekannten Methoden der Impedanz- bzw. Kapazitätsmessung durchgeführt werden. Die Kapazität des einem Kondensator ähnelnden Bereich ist abhängig von der Oberfläche der Anode. Die gemessene Kapazität und die Größe der Oberfläche der Opferanode können für den Zweck einer zuverlässigen Verschleißmessung im Warmwasserspeicher als direkt proportional angesehen werden, da die übrigen Einflüsse wie die chemische Zusammensetzung des Elektrolyten und auch die Temperatur im Warmwasserspeicher nahezu konstant sind. Eine große Anodenoberfläche ist also mit einer größeren Kapazität verknüpfbar als eine kleine Anodenoberfläche. Entsprechend kann über regelmäßige Messungen der Kapazität der Verschleißzustand der Anode bestimmt werden und erst bei Unterschreiten einer Mindestkapazität, die einer bestimmten Restoberfläche der Anode entspricht, ein Signal für den Verschleiß der Opferanode ausgegeben werden.

Da die Opferanode im eingebauten Zustand im Wasserspeicher überwacht werden soll, kann die aus der Helmholtz-Doppelschicht resultierende Kapazität nicht direkt gemessen werden. Daher wird eine Impedanzmessung zwischen Opferanode und Behälterwand durchgeführt und es wird die Impedanz des gesamten Warmwasserspeichersystems bestehend aus Behälter, Opferanode und Elektrolyt gemessen. Die Impedanz beschreibt den Wechselstromwiderstand des Systems, dieser kann aus ohmschen, kapazitiven und induktiven Anteilen bestehen. Das hochfrequente Signal wird aber nur durch die Helmholtz-Doppelschicht beeinflusst, so dass die übrigen systembedingten Einflüsse der gemessenen Impedanz als konstant anzusehen ist und die gemessene Impedanz als proportional zur Kapazität an der Opferanode angesehen werden kann. Durch einen Vergleich des eingespeisten und des gemessenen Signals kann somit die Ausdehnung der Helmholtz-Doppelschicht und damit die wirksame Oberfläche der Opferanode quantitativ ermittelt werden.

Ein wesentlicher Vorteil der vorliegenden Erfindung liegt also darin, dass der Lebenszyklus der Opferanode jederzeit nachzuverfolgen ist und erst bei nahezu vollständigem Verschleiß das Signal für den notwendigen Austausch der Opferanode abgegeben wird.

In eine Basisausführung des Verfahrens reicht es aus, aus den fortlaufenden Messungen eine Tendenz abzuleiten und anhand bestimmter Erfahrungswerte oder Grenzwerte einen Zustand zu erfassen, bei dem ein Austausch der Opferanode notwendig wird.

Möglich ist aber auch die quantitative Bestimmung der Kapazität oder der Anodenoberfläche, und zwar insbesondere durch einen Vergleich der temporären Messwerte mit Referenzmessungen, die entweder werksseitig oder vor Inbetriebnahme durchgeführt wurden. Indem bei der Inbetriebnahme des Wasserspeichers oder nach einem Austausch der Opferanode eine Referenzmessung der Impedanz vorgenommen wird, wird ein Referenzwert gesetzt, der z. B. als 100% der ursprünglichen Kapazität oder der ursprünglichen Oberfläche der Opferanode definiert ist. Die Wahl der Oberfläche hat den Vorteil, dass sie aus der bekannten Geometrie der Opferanode rechnerisch bestimmt werden kann und keine Referenzmessung notwendig ist.

Eine weitere wichtige Erkenntnis für die vorliegende Erfindung ist, dass die zunehmende Zersetzung der Opferanode im Betrieb des Trinkwasserspeichers aufgrund der Herauslösung von oberflächennahen Bereichen zunächst zu einer Oberflächenvergrößerung an der Opferanode führt, was mit einer Erhöhung der Kapazität und demzufolge der messbaren Impedanz einhergeht. Erst wenn die ursprüngliche, meist zylindrische Geometrie der Opferanode weit zerstört ist, die Opferanode also deutlich kürzer geworden ist und/oder im Durchmesser abgenommen hat, heben sich die Effekte von Oberflächenvergrößerung durch Porosität und Oberflächenreduzierung durch Reduzierung der Geometrie auf, so dass vorübergehend eine Impedanz messbar ist, die dem ursprüngliche Referenzwert entspricht. Bereits dieser Punkt kann als Vorindikator für den Verschleiß genutzt werden. Es kann z. B. ein Signal für den Benutzer ausgeben werden oder das Messintervall für die nachfolgenden Impedanzmessungen verkürzt werden.

Zur näheren Beschreibung der Erfindung wird auf die Zeichnungen Bezug genommen. Die Figuren zeigen im Einzelnen:
- Fig. 1: den Verlauf der Oberflächengröße einer Opferanode über der Zeit;
- Fig. 2: die Ableitungsfunktion zu dem Verlauf aus Figur 1 und
- Fig. 3: einen weiteren Verlauf der Oberflächengröße einer Opferanode über der Zeit;
- Fig. 4: die Ableitungsfunktion zu dem Verlauf aus Figur 3 und
- Fig. 5: ein Warmwasserspeicher mit einer Anodenüberwachungseinrichtung in schematischer Ansicht.

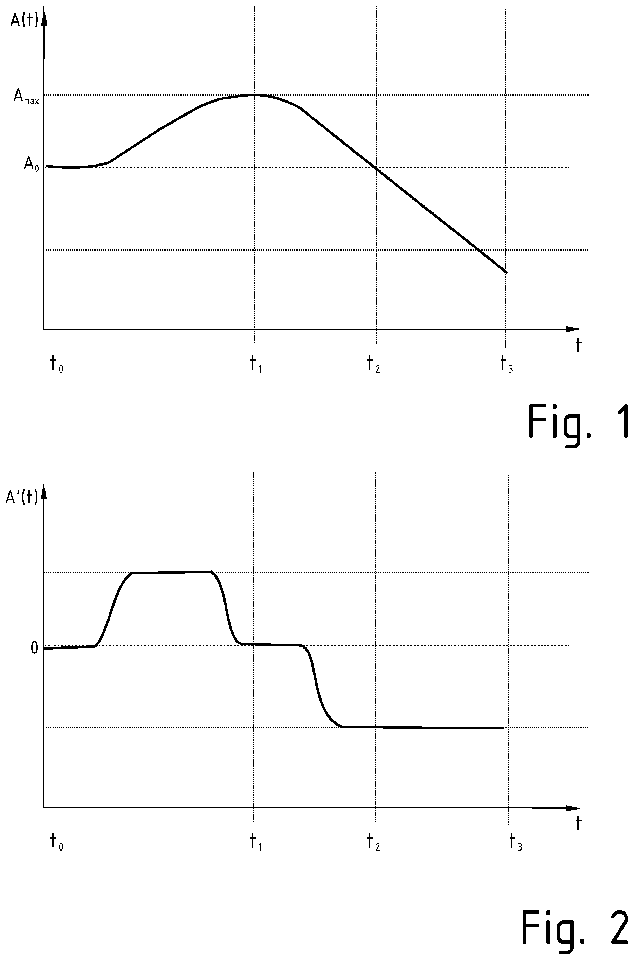

In Figur 1 ist der exemplarische Verlauf des Zustands einer Magnesium-Opferanode in einem Wasserspeicher über der Zeit dargestellt, wobei in dem Beispiel als Zustandsindikator die Größe der Oberfläche A(t) des aus dem unedlen Anodenmaterial gebildeten Mantels der Opferanode gesetzt ist.

Bei der Inbetriebnahme zum Zeitpunkt to wird eine Referenzmessung der Impedanz der Opferanode durchgeführt und der Messwert mit einer relativen Anodenoberfläche A_{0 =} 100% als Bezugswert definiert. Eine relative Bezugsgröße ist ausreichend, da sie für die Überwachung der kathodischen Schutzmaßnahmen ausreichend ist und quantitative Bestimmung nicht notwendig sind. Möglich ist auch, die aus der Fertigung bekannte konkrete Oberflächengröße als Referenzwert heranzuziehen.

Aufgrund zunehmender Porosität infolge des im Betrieb des Warmwasserspeichers einsetzenden elektrolytischen Abbaus der Opferanode, erfolgt bis zum Zeitpunkt t₁ eine Oberflächenvergrößerung Aₘₐₓ. Danach sinkt die über die periodische Impedanzmessung bestimmte Oberfläche A(t) wieder kontinuierlich ab. Zum Zeitpunkt t₂ ist sie wieder beim Referenzwert A₀ = 100% angelangt. Zum Zeitpunkt t₃ ist die restliche Oberfläche der Opferanode so klein, dass ein notwendiger Austausch signalisiert wird.

Eine besonders vorteilhafte Ausführungsform des erfindungsgemäßen Verfahrens sieht vor, nicht nur bei jeder Messung einen Vergleich mit dem Referenzwert vorzunehmen, sondern den zeitlichen Verlauf aller Messwerte für die Impedanz seit Inbetriebnahme aufzunehmen, daraus eine Näherungsfunktion zu bilden, insbesondere mit den bekannten Methoden der numerischen Analyse, und aus dieser wiederum zumindest eine differenzielle Ableitung davon zu bilden.

Mittels der ersten differentiellen Ableitungsfunktion A'(t), die in Figur 2 dargestellt ist, ist ohne die Notwendigkeit einer graphischen Darstellung und/oder einer Auswertung durch einen Benutzer die Entwicklung der Opferanode direkt charakterisierbar:
- Ist der Wert der Ableitungsfunktion A'(t) positiv, liegt die Phase der Oberflächenvergrößerung zwischen t₀ und t₁ vor.
- Dann folgt ein Sattelpunkt mit einem Nulldurchgang der Ableitungsfunktion A'(t), der das temporäre Maximum der porösen Anodenoberfläche charakterisiert.
- Schließlich folgt ein negativer Wert der Ableitungsfunktion A'(t) entsprechend der Zersetzungsphase des Anodenkörpers zwischen t₁ und t₃.

Eine weitere vorteilhafte Ausführungsform des Verfahrens nach der Erfindung sieht vor, auch den zeitlichen Verlauf der Ableitungsfunktion A'(t) zu beobachten, und zwar insbesondere dann, wenn ein Extremwert der Oberflächenfunktion A(t) erreicht wird, und bei der Ableitungsfunktion A'(t) den Wert null hat, wobei ein Sattelpunkt zu beobachten ist. Dieser Sattelpunkt kann auf den zu erwartenden Zustand der Oberflächenvergrößerung bei t₁ hindeuten. Allerdings muss davor und danach eine Veränderung stattfinden, der Betrag der Ableitungsfunktion A'(t) also in einem gewissen Zeitintervall wieder ungleich null sein.

Wenn diese erwartete Veränderung bei A'(t) jedoch über einen längeren Zeitraum nicht eintritt, so bedeutet das, dass an der Opferanode keine Oberflächenveränderung mehr stattfindet, was auf eine sogenannte Passivierung der Opferanode hindeutet. Das heißt, dass sich auf der gesamten Oberfläche der Anode eine chemisch inerte Oxidschicht ausgebildet oder abgelagert hat. Eine solche Passivierung ist selten, weil sie nur dann eintreten kann, wenn eine unerwartete chemische Konstellation im Trinkwassersystem vorliegt, an das der Wasserspeicher angebunden ist, z. B. wenn Ionen eines elektrochemisch gesehen unedleren Metalls wie Zink in Lösung sind. Jedoch führt die Passivierung der Opferanode immer dazu, dass der Wasserspeicher unbemerkt ohne wirksames kathodisches Schutzsystem betrieben wird und eine Zerstörung der metallischen Behälterwand unweigerlich eintreten wird, ohne dass sich die Geometrie der Opferanode geändert hat.

Bei einer elektrisch nicht leitfähigen Passivierung auf der Opferanode, ist ein kapazitives Verhalten am Übergang der Anode zum Wasser ist weiterhin erfassbar. Die passivierende Schicht trennt die Anode vom Elektrolyt und stellt damit ebenfalls einen Kondensator da. Da bei der Passivierung der Anode keine Veränderung der Oberfläche mehr stattfindet, erfolgt keine Änderung der Impedanz über der Zeit.

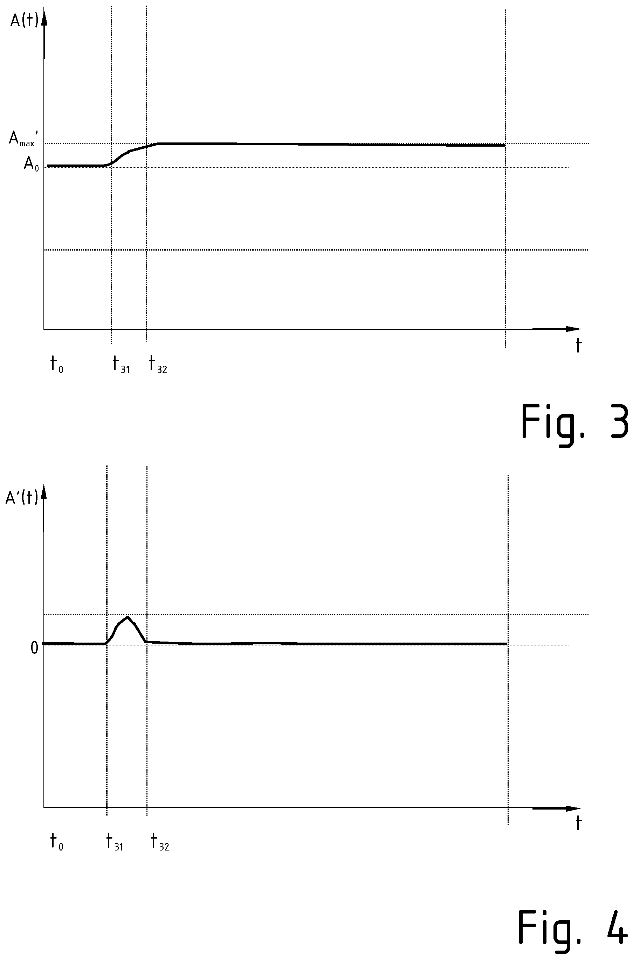

Figur 3 zeigt in schematischer Weise den durch die nach der Erfindung vorgesehene Impedanzmessung in dem Wasserspeicher ermittelte Oberflächengröße einer passivierten Opferanode. Eine erste Veränderung der Oberfläche A(t) ist zwar ab einem Zeitpunkt t₃₁ feststellbar, was sich auch darin äußert, dass die differentielle Ableitung gemäß Figur 4 größer als null ist. Jedoch ist zu beobachten, dass die Opferflächenvergrößerung schon sehr bald stoppt, und zwar auf einem Niveau Aₘₐₓ' < Aₘₐₓ, d.h. eine so weitgehende Oberflächenvergrößerung durch Porosität bei einer normalen Opferanode wie nach Figur 1 zu beobachten war, wird bei einer passivierten, also fehlerhaften Opferanode nicht annähernd erreicht.

In jedem Fall bleibt gemäß Figur 3 die gemessene Oberfläche ab dem Zeitpunkt t₃₂ auf dem einmal gemessenen Messwert und die Ableitung gemäß Figur 4 hat wieder den Wert null. Dies sind Indikatoren für ein funktionsunfähiges kathodisches Schutzsystem.

Mit dem Verfahren nach der Erfindung in der bevorzugten Ausführungsform kann ein solcher Störungszustand im kathodischen Schutzsystem aufgrund einer Passivierung erkannt werden, indem bei Vorliegen eines Nullwerts der Ableitungsfunktion A'(t) für eine bestimmte Zeitdauer eine zusätzliche Überwachungsfunktion aktiviert wird. Dies gilt nicht nur für einen Sattelpunkt im zeitlichen Verlauf des Betriebs, sondern insbesondere auch für den Fall, dass schon nach erstmaliger Inbetriebnahme des Wasserspeichers bzw. seines kathodischen Schutzsystem keinerlei Veränderung mehr registrierbar ist. Vorzugsweise wird die Überwachungsfunktion also direkt nach der Referenzmessung gestartet und abgebrochen, sobald A'(t) <> 0. Immer, wenn nachfolgend A'(t) nochmals gleich null ist, wird die Überwachungsfunktion neu getriggert. Anstelle eines Nullwertes kann auch um den Nullpunkt herum ein sehr schmales Werteintervall für A'(t) definiert sein, das mit einem scheinbar unveränderten Anodenzustand gleichgesetzt wird.

Wird während der aktivierten Überwachungsfunktion keine Veränderung in der Oberflächenfunktion A(t) registriert bzw. bleibt die Ableitungsfunktion A'(t) null bzw. im Toleranzband nahe null, so deutet dies auf einen Störungszustand infolge Passivierung hin. Der Benutzer kann mittels eines Störungssignals aufgefordert werden, die Opferanode auszutauschen oder die oberflächennahe Oxidschicht mechanisch zu entfernen.

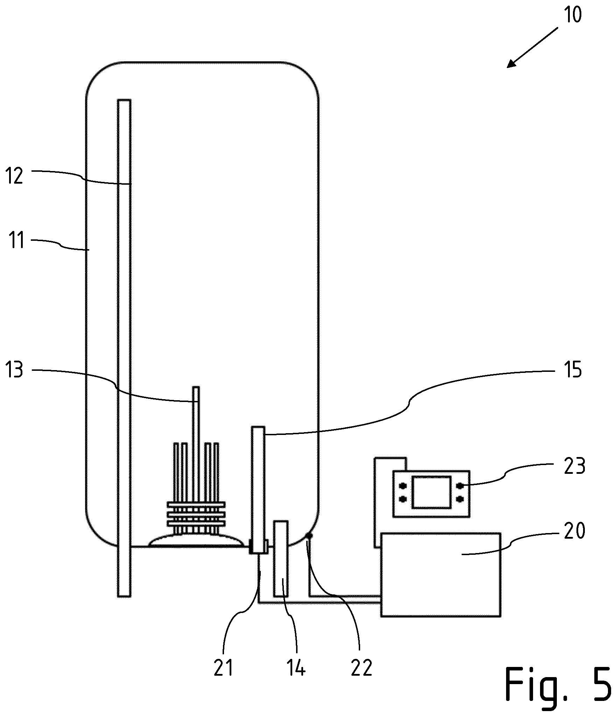

Figur 5 zeigt einen Warmwasserspeicher 10 mit einer Anodenüberwachungseinrichtung 20. Der Warmwasserspeicher 10 umfasst eine metallische, innen emaillierte Behälterwand 11 mit einem Warmwasserauslauf 12, einem Kaltwassereinlauf 14 und einer Heizeinrichtung 13, wobei es sich um einen elektrischen Heizstab oder einen Wärmetauscher handeln kann. Im Bodenbereich ist eine stabförmige Opferanode 15 aus Magnesium angeordnet, die aufgrund einer Füllstandsregelung stets unter Wasser liegt. Die Opferanode 15 ist von der Behälterwand 11 elektrisch isoliert.

Dieser an sich bekannte Aufbau wird durch eine Überwachungseinrichtung 20 ergänzt. Diese ist über ein Massekabel 22 mit der Behälterwand 11 und über eine Messleitung 21 mit der Opferanode 15 verbunden. Die Überwachungseinrichtung 20 gibt über einen Frequenzgenerator wenigstens ein hochfrequentes Signal auf die Opferanode 15, mit welchem die Impedanz des Warmwasserspeichers 10 als Gesamtsystem gemessen werden kann.

Eine Bedien- und Anzeigeeinheit 23 kann vorgesehen sein, um einem Benutzer direkt am Warmwasserspeicher 10 den Anodenzustand anzeigen zu können oder die Referenzmessung nach Anodenaustausch auszulösen. Möglich ist aber auch, eine Verbindung zu einer übergeordneten Steuerungseinheit einer Heizungsanlage vorzusehen oder allein eine optische und/oder akustische Störungsanzeige vorzusehen, mit der eine Fehlfunktion der Opferanode signalisiert wird.

## Patentansprüche

1. Verfahren zur Zustandsbestimmung einer Opferanode (15) in einem Wasserspeicher (10) mit folgenden Schritten
- Beaufschlagen der Opferanode (15) mit einem hochfrequenten elektrischen Wechselstromsignal;
- Wiederholte Messung der Impedanz im Warmwasserspeicher (10) in dem zwischen der Opferanode (15) und einer metallischen Behälterwand (11) ausgebildeten Stromkreis und Definition eines Zustandsindikators der Opferanode (15) mit dem erhaltenen Impedanz-Messwert, wobei als Zustandsindikator eine qualitative und quantitative Bewertung der Oberfläche der Opferanode auf Basis der Impedanzmessung und/oder der daraus ermittelten Kapazität
durchgeführt wird;
- Signalisierung eines Abnutzungszustands der Opferanode (15) nach Unterschreiten eines Grenzwertes bei dem Zustandsindikator und/oder bei Ausfall der Impedanzmessung.

2. Verfahren nach Anspruch 1, **dadurch gekennzeichnet, dass** bei Inbetriebnahme des Wasserspeichers (10) oder nach Austausch der Opferanode (15) eine Referenzmessung der Impedanz zum Zeitpunkt t₀ durchgeführt wird, und dass zur Bildung eines temporären Zustandsindikators die während des Betriebs des Warmwasserspeichers (10) aufgenommenen Messwerte jeweils in Relation zu dem bei der Referenzmessung aufgenommenen Referenzwert gesetzt werden.

3. Verfahren nach Anspruch 2, **dadurch gekennzeichnet**, wobei die bei den wiederholten Messungen der Impedanz ermittelten Messwerte jeweils in Relation zu der bei der Referenzmessung ermittelten Ausgangsgröße Ao der Oberfläche gesetzt werden.

4. Verfahren nach einem der Ansprüche 1 bis 3, **dadurch gekennzeichnet, dass** aus den mit den wiederholten Messungen ermittelten Messwerten eine angenäherte Zustandsfunktion A(t) für den Zustand der Opferanode ermittelt wird und eine erste differentielle Ableitung A'(t) der Zustandsfunktion A(t) gebildet wird.

5. Verfahren nach Anspruch 4, **dadurch gekennzeichnet, dass** eine Überwachungsfunktion für einen Überwachungszeitraum t_{Ü} gestartet wird, sobald die differentielle Ableitung A'(t) null oder kleiner als ein Mindestwert ist, wobei
- entweder die Überwachungsfunktion beendet wird, sobald die differentielle Ableitung A'(t) größer null oder größer als der Mindestwert ist,
- oder ein Störungszustand nach Ablauf des Überwachungszeitraums signalisiert wird.

6. Verfahren nach einem der Ansprüche 1 bis 5, **dadurch gekennzeichnet, dass** die Impedanzmessung jeweils mit wenigstens zwei unterschiedlichen Messfrequenzen mehrfach durchgeführt wird und ein Mittelwert aus allen Messungen als Messwert für den Zustandsindikator gesetzt wird.

7. Warmwasserspeicher (10) zur Durchführung des Verfahrens nach einem der vorhergehenden Ansprüche, wenigstens umfassend:
- eine metallischen Behälterwand (11),
- einen Warmwasserauslauf (12);
- einer Heizeinrichtung (13);
- einen Kaltwassereinlauf (14) und
- eine metallischen Opferanode (15)
**gekennzeichnet durch** eine Anodenüberwachungseinrichtung (20), die eine Impedanzmesseinheit mit einem Frequenzgenerator zur Erzeugung eines hochfrequenten elektrischen Wechselstromsignals umfasst, wobei die Impedanzmesseinheit mit einem Pol mit der Opferanode (15) und mit dem anderen Pol mit der metallischen Behälterwand (11) verbunden ist, wobei die Impendanzmesseinheit dazu eingerichtet ist, als Zustandsindikator für die Abnutzung der Opferanode eine qualitative und quantitative Bewertung der Oberfläche der Opferanode auf Basis der Impedanzmessung und/oder der daraus ermittelten Kapazität durchzuführen.

## Claims

1. A method for determining the state of a sacrificial anode (15) inside a water storage tank (10) comprising the following steps:
- applying a high-frequency electric alternating current signal to the sacrificial anode (15);
- repeatedly measuring the impedance inside the hot water storage tank (10) in the electric circuit formed between the sacrificial anode (15) and a metallic tank wall (11), and defining a state indicator of the sacrificial anode (15) with the obtained impedance measurement value, wherein a qualitative and quantitative evaluation of the surface of the sacrificial anode based on the impedance measurement and/or the capacity determined therefrom is performed as the state indicator;
- signalling a wear state of the sacrificial anode (15) after the state indicator falls below a limit and/or upon failure of the impedance measurement.

2. The method according to claim 1, **characterised in that**, when commissioning the water storage tank (10), or after replacing the sacrificial anode (15), a reference measurement of the impedance at the time t₀ is performed, and that, for forming a temporary state indicator, each of the measurement values recorded during operation of the hot water storage tank (10) is compared to the reference value recorded during the reference measurement.

3. The method according to claim 2, **characterised in that** each of the measurement values determined during the repeated measurements of the impedance is compared to the initial value A₀ of the surface area determined during the reference measurement.

4. The method according to any one of claims 1 to 3, **characterised in that** an approximate state function A(t) for the state of the sacrificial anode is determined from the measurement values determined with the repeated measurements, and a first differential derivation A'(t) of the state function A(t) is formed.

5. The method according to claim 4, **characterised in that** a monitoring function for a monitoring period t_{Ü} is started once the differential derivation A'(t) is zero or less than a minimum value, wherein
- either the monitoring function is terminated once the differential derivation A'(t) is greater than zero or greater than the minimum value,
- or a fault state is signalled after expiry of the monitoring period.

6. The method according to any one of claims 1 to 5, **characterised in that** the impedance measurement is performed multiple times with at least two different respective measurement frequencies, and an average value from all measurements is set as the measurement value for the state indicator.

7. A hot water storage tank (10) for performing the method according to any one of the preceding claims, including at least:
- a metallic tank wall (11),
- a hot water outlet (12),
- a heater (13),
- a cold water inlet (14), and
- a metallic sacrificial anode (15),
**characterised by** an anode monitoring device (20) including an impedance measurement unit comprising a frequency generator for generating a high-frequency electric alternating current signal, wherein one terminal of the impedance measurement unit is connected to the sacrificial anode (15) and its other terminal is connected to the metallic tank wall (11), wherein the impedance measurement unit is configured to perform a qualitative and quantitative evaluation of the surface of the sacrificial anode based on the impedance measurement and/or the capacity determined therefrom as a state indicator for wear of the sacrificial anode.

## Revendications

1. Procédé de détermination de l'état d'une anode sacrificielle (15) dans un ballon d'eau chaude (10) comportant les étapes suivantes :
- application d'un signal électrique de courant alternatif à haute fréquence à l'anode sacrificielle (15) ;
- mesure répétée de l'impédance du ballon d'eau chaude (10) dans le circuit électrique formé entre l'anode sacrificielle (15) et une paroi de cuve (11) métallique et définition d'un indicateur d'état de l'anode sacrificielle (15) au moyen de la valeur de mesure d'impédance obtenue, l'indicateur d'état se présentant sous la forme d'une évaluation qualitative et quantitative de la surface de l'anode sacrificielle effectuée compte tenu de la mesure d'impédance et/ou la capacité déterminée à partir de celle-ci ;
- signalement d'un état d'usure de l'anode sacrificielle (15) après le passage de l'indicateur d'état en dessous d'une valeur limite et/ou lors d'une défaillance de la mesure d'impédance.

2. Procédé selon la revendication 1, **caractérisé en ce que**, lors de la mise en service du ballon d'eau chaude (10) ou après le remplacement de l'anode sacrificielle (15), une mesure de référence de l'impédance à l'instant t₀ est effectuée et **en ce que**, pour former un indicateur d'état temporaire, les valeurs de mesure enregistrées pendant le fonctionnement du ballon d'eau chaude (10) sont chacune mises en relation avec la valeur de référence enregistrée lors de la mesure de référence.

3. Procédé selon la revendication 2, **caractérisé en ce que** les valeurs de mesure déterminées lors des mesures répétées de l'impédance sont chacune mises en relation avec la grandeur de sortie A₀ de la surface déterminée lors de la mesure de référence.

4. Procédé selon l'une des revendications 1 à 3, **caractérisé en ce que**, à partir des valeurs de mesure déterminées par les mesures répétées, une fonction d'état A(t) approchée concernant l'état de l'anode sacrificielle est déterminée et une dérivée première différentielle A'(t) de la fonction d'état A(t) est formée.

5. Procédé selon la revendication 4, **caractérisé en ce qu'**une fonction de surveillance est démarrée pour une période de surveillance t_{Ü} dès que la dérivée différentielle A'(t) est nulle ou inférieure à une valeur minimale, sachant que
- soit il est mis fin à la fonction de surveillance dès que la dérivée différentielle A'(t) est supérieure à zéro ou supérieure à la valeur minimale,
- soit un état de défaut est signalé après l'écoulement de la période de surveillance.

6. Procédé selon l'une des revendications 1 à 5, **caractérisé en ce que** la mesure d'impédance est effectuée plusieurs fois avec, à chaque fois, au moins deux fréquences de mesure différentes, et une valeur moyenne de toutes les mesures est fixée comme valeur de mesure propre à l'indicateur d'état.

7. Ballon d'eau chaude (10) destiné à la réalisation du procédé selon l'une des revendications précédentes, comprenant au moins :
- une paroi de cuve (11) métallique,
- une sortie d'eau chaude (12),
- un dispositif de chauffage (13),
- une entrée d'eau froide (14), et
- une anode sacrificielle (15) métallique ;
**caractérisé par** un dispositif de surveillance d'anode (20) qui comprend une unité de mesure d'impédance dotée d'un générateur de fréquence destiné à générer un signal électrique de courant alternatif à haute fréquence, l'unité de mesure d'impédance étant reliée par un pôle à l'anode sacrificielle (15) et par l'autre pôle à la paroi de cuve (11) métallique, l'unité de mesure d'impédance étant conçue pour effectuer une évaluation qualitative et quantitative de la surface de l'anode sacrificielle, compte tenu de la mesure d'impédance et/ou la capacité déterminée à partir de celle-ci, comme indicateur d'état concernant l'usure de l'anode sacrificielle.
